# EUROPEAN PATENT SPECIFICATION

(11) **EP 2 075 896 B1**
(45) Date of publication and mention of the grant of the patent: **21.11.2012**
(21) Application number: 07301639.6
(22) Date of filing: 06.12.2007
(51) Int. Cl.: H02K 7/00

(54) **Drive element, electric motor, and drive unit**
Antriebselement, Elektromotor und Antriebseinheit
Élément de commande, moteur électrique et unité de commande

(43) Date of publication of application: 01.07.2009
(73) Proprietor: Dunkermotoren GmbH, 79848 Bonndorf (DE)
(72) Inventor: Selb, Egon, 79865 Grafenhausen (DE)
(74) Representative: Schäfer, Wolfgang

(56) References cited:
- EP-A- 1 795 701
- DE-A1- 10 125 328
- DE-A1- 10 338 351
- DE-U1- 29 902 974

## Description

The invention relates to a drive element for driving an output shaft, according to the preamble of claim 1, to an electric motor, and to a drive unit according to the preamble of claim 6. (See document DE-U1-29902974).

In lots of applications, where a motor, especially an electric motor, drives whatever device, the device is to be given a predetermined position. Such position is being input to a control unit as a desired value, mostly either a control voltage or a digital value.

A control loop then is to ensure that the actual position is in line with the predetermined position.

One example is a Venetian blind that should not only be dropped to a given height, but also be brought in a wanted position of the lamellae, both as a result of a common drive unit. Similar requirements are to be found in lots of applications.

A drive unit according to the preamble of claim 6 showed an unsatisfactory result in being insufficiently accurate.

It is the object of the invention to provide such drive unit with improved accuracy and suitable parts therefor.

This is solved by a drive element according to the teachings of claim 1, and by an electric motor according to the teachings of claim 5, and by a drive unit according to the teachings of claim 6.

The idea is to have a form-fit connection between the driving and the driven part, that is made free of play by means of at least one spring pin or dowel pin.

This idea is based on the fact, that non-linearities in the control loop characteristic mostly are compensated for, but any kind of hysteresis makes problems. Hysteresis in the control loop characteristic inter alia is a consequence of any kind of play in a power transmission chain. In the initial example of a drive for a Venetian blind the play between the gear and the output shaft was higher then the play within the gear and could be avoided with less effort. Of course there are other ways of reaching a form-fit connection, and thus even no play, but the use of spring pins showed to be the easiest to assemble.

Further embodiments of the invention are given in the subclaims and in the following description.

In the following the invention will be described with the aid of the accompanying drawings, in which:
- Figure 1: shows a perspective view of a drive unit according to the invention, including an electric motor according to the invention with a drive element according to the invention. The rear end of the drive unit is cut off.
- Figure 2: shows a perspective view of a drive element according to the invention.
- Figure 3: shows a top view of the drive element of the invention of figure 2.

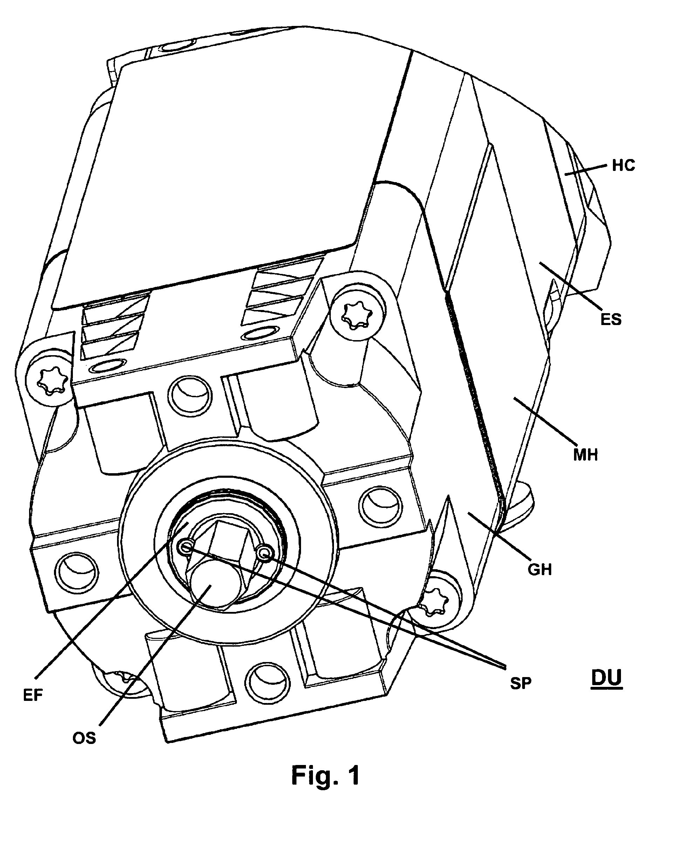

The drive unit DU in figure 1 shows some parts, arranged back-to-back of one another. The foremost part is a gear housing GH, followed by a motor housing MH, an end shield ES, and a housing HC including control parts.

Forwards extends a hexagonal output shaft OS, affixed by two spring pins SP to a planet-wheel carrier, an end face EF of which only is to be seen here. The planet-wheel carrier in this example is the drive element according to the invention.

The gear housing GH in this example houses a planetary gear, the planet-wheel carrier of which holds and drives the output shaft OS. The spring pins SP ensure that there is no play between the gear, represented by the planet-wheel carrier, and the output shaft OS.

The motor housing MH houses the proper electric motor, namely stator and rotor. The stator normally is affixed to the motor housing MH before assembling, whereas the rotor will be inserted during assembling.

The end shield completes the mechanical part of the electric motor EM, especially carrying a bearing, mostly a ball bearing, for the axle. A further bearing may be inserted in a wall between the gear housing GH and the motor housing MH, being part of either of these housings.

The housing HC including control parts may house electronics for supplying the coils of the stator in the case of a brushless electric motor. It may house an end switch or an overload protection, and in the drive unit according to this invention it houses a positioning sensor, and a control unit. It is to be mentioned that the control unit needs not necessarily be housed in a housing adapted and assembled to the housing of the electric motor.

It is clear, that the profile of the output shaft OS is not necessarily a hexagonal one and that it is not necessarily exactly two spring pins SP to hinder a play. The minimum is one spring pin SP interacting with a shallow part in the circumference of the output shaft. But evenly distributed spring pins and counterparts thereof are to be preferred.

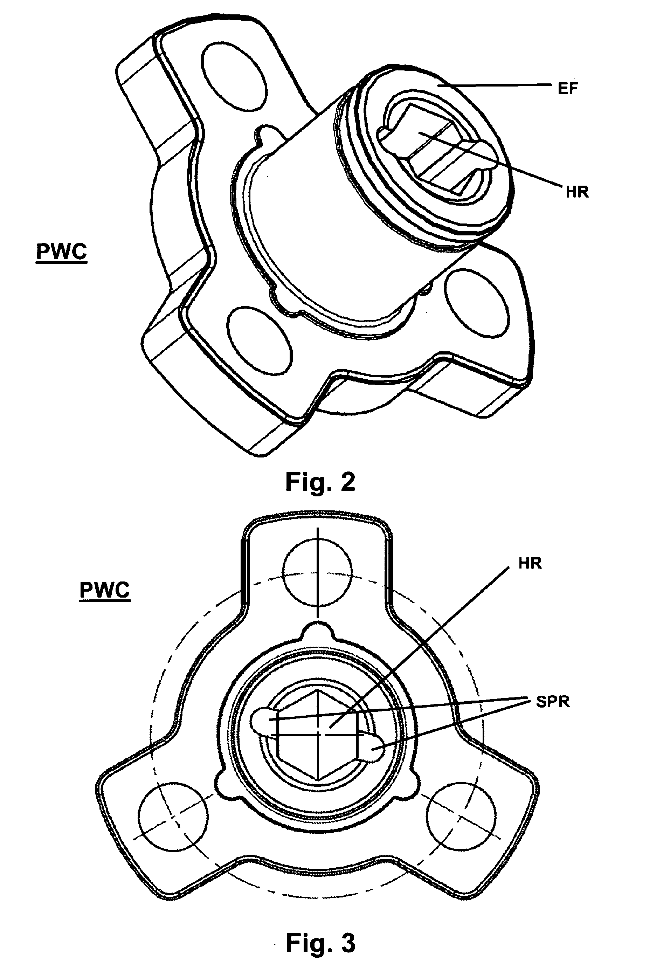

The perspective view of a drive element according to the invention seen in figure 2 shows a planet-wheel carrier PWC as an example of such drive element. Lots of applications where exact positioning is to be reached, need high gear reduction. Preferred solutions therefore are the use of a worm gear or a planetary gear. A worm gear is preferred when the direction of the output shaft is allowed to depart from the direction of the motor axle by 90°, whereas a planetary gear is preferred when the output shaft and the motor axle should be concentric. Here a planetary gear is used, meaning that the last element in the gear is the planet wheel carrier PWC, which has to be given a form-fit connection with the output shaft.

The form-fit connection here mainly is reached by a hexagonal recess HR in the planet-wheel carrier PWC and a corresponding hexagonal profile of the output shaft not shown here. In our example the hexagonal output shaft is part of a hexagonal motor axle extending throughout the whole drive unit and at the other end being affixed to the already mentioned positioning sensor.

The planet-wheel carrier PWC mainly contains three arms with recesses for accepting a stub of a planet-wheel's axle and a cylindrical projection as it's own axle. This projection ends in the already mentioned end face EF.

The top view of this drive element in figure 3 clearly shows the hexagonal recess HR and two recesses SPR for holding the spring pins.

A spring pin is a slotted elastic cylinder that tends to open after insertion into the recesses SPR, thus affixing the hexagonal output shaft with the hexagonal recess.

## Claims

1. Drive element (PWC) for driving an output shaft (OS), with a first recess (HR) for reception of the output shaft (OS), and with at least one second recess (SPR) at the edge of the first recess (HR), **characterized in that** the second recess (SPR) is adapted for reception of a spring pin (SP) and designed such that the spring pin (SP) inserted therein extends into the first recess (HR) in a manner to build a tension between the drive element (PWC) and the output shaft (OS), when inserted therein.

2. Drive clement (PWC) according to claim 1, wherein at least two second recesses (SPR) are foreseen that are distributed at the circumference of the first recess (HR).

3. Drive element (PWC) according to claim 2, wherein the first recess (HR) is a regular hexagon that is symmetric to the axle of the drive element (PWC), and that the two second recesses (SPR) are placed opposing to one another.

4. Drive element (PWC) according to claim 1, herein it is built as a planet-gear carrier (PWC) of a planetary gear.

5. Electric motor (GH, MH, ES), **characterized in that** it contains the drive element (PWC) according to claim 1, and the output shaft (OS) showing at least one face for interacting with the spring pin (SP) inserted into the at least one second recess (SPR) of the drive clement (PWC).

6. Drive unit (DU), including an electric motor (GH, MH, ES), a positioning sensor, and a control unit for controlling the position of a driven part, **characterized in that** the electric motor is a motor according to claim 5.

## Patentansprüche

1. Antriebselement (PWC) zum Antreiben einer Abtriebswelle (OS), mit einer ersten Vertiefung (HR) zum Aufnehmen der Abtriebswelle (OS) und mit mindestens einer zweiten Vertiefung (SPR) an der Kante der ersten Vertiefung (HR), **dadurch gekennzeichnet, dass** die zweite Vertiefung (SPR) angepasst ist, einen Federstift (SP) aufzunehmen, und so ausgelegt ist, dass der darin eingesteckte Federstift (SP) sich in die erste Vertiefung (HR) in einer Weise erstreckt, dass eine Spannung zwischen dem Antriebselement (PWC) und der Abtriebswelle (OS) aufgebaut wird, wenn er darin eingesteckt wird.

2. Antriebselement (PWC) nach Anspruch 1, wobei mindestens zwei zweite Vertiefungen (SPR) vorgesehen sind, die am Umfang der ersten Vertiefung (HR) verteilt sind.

3. Antriebselement (PWC) nach Anspruch 2, wobei die erste Vertiefung (HR) ein regelmäßiges Sechseck ist, das symmetrisch zur Achse des Antriebselements (PWC) ist, und die zwei zweiten Vertiefungen (SPR) einander gegenüber angeordnet sind.

4. Antriebselement (PWC) nach Anspruch 1, wobei es als Planetenradträger (PWC) eines Planetengetriebes aufgebaut ist.

5. Elektromotor (GH, MH, ES), **dadurch gekennzeichnet, dass** er das Antriebselement (PWC) nach Anspruch 1 und die Abtriebswelle (OS), die mindestens eine Fläche für die Wechselwirkung mit dem in die mindestens eine zweite Vertiefung (SPR) des Antriebselements (PWC) eingesteckten Federstift (SP) aufweist, besitzt.

6. Antriebseinheit (DU) mit einem Elektromotor (GH, MH, ES), einem Positionssensor und einer Steuereinheit zum Steuern der Position eines angetriebenen Teils, **dadurch gekennzeichnet, dass** der Elektromotor ein Motor nach Anspruch 5 ist.

## Revendications

1. Elément d'entraînement (PWC) pour entraîner un arbre de sortie (OS) avec un premier évidement (HR) pour la réception de l'arbre de sortie (OS) et avec au moins un deuxième évidement (SPR) au bord du premier évidement (HR), **caractérisé en ce que** le deuxième évidement (SPR) est adapté pour la réception d'une broche élastique (SP) et conçu de sorte que la broche élastique (SP) insérée dans celui-ci s'étende dans le premier évidement (HR) d'une manière à développer une tension entre l'élément d'entraînement (PWC) et l'arbre de sortie (OS), lorsqu'elle est insérée dans celui-ci.

2. Elément d'entraînement (PWC) selon la revendication 1, dans lequel au moins deux deuxièmes évidements (SPR) sont prévus, lesquels sont répartis au niveau de la circonférence du premier évidement (HR).

3. Elément d'entraînement (PWC) selon la revendication 2, dans lequel le premier évidement (HR) est un hexagone régulier qui est symétrique par rapport à l'axe de l'élément d'entraînement (PWC), et les deux deuxièmes évidements (SPR) sont placés opposés l'un à l'autre.

4. Elément d'entraînement (PWC) selon la revendication 1, lequel est réalisé en tant que porte-satellites (PWC) d'un satellite.

5. Moteur électrique (GH, MH, ES), **caractérisé en ce qu'**il contient l'élément d'entraînement (PWC) selon la revendication 1, et l'arbre de sortie (OS) présentant au moins une face pour interagir avec la broche élastique (SP) insérée dans ledit au moins un deuxième évidement (SPR) de l'élément d'entraînement (PWC).

6. Unité d'entraînement (DU), comprenant un moteur électrique (GH, MH, ES), un capteur de positionnement, et une unité de commande pour commander la position d'une partie entraînée, **caractérisée en ce que** le moteur électrique est un moteur selon la revendication 5.
